# EUROPEAN PATENT SPECIFICATION

(11) **EP 1 650 633 B1**
(45) Date of publication and mention of the grant of the patent: **17.12.2008**
(21) Application number: 05256096.8
(22) Date of filing: 29.09.2005
(51) Int. Cl.: G06F 21/24, H04L 29/00

(54) **Method, apparatus and system for enforcing security policies**
Verfahren, Apparat und System zur Durchsetzung von Sicherheitsrichtlinien
Procédé, dispositif et système permettant l'application de politiques de sécurité

(30) Priority: 21.10.2004 US 970143
(43) Date of publication of application: 26.04.2006
(73) Proprietor: Lucent Technologies Inc., Murray Hill NJ 07974-0636 (US)
(72) Inventor: van Bemmel, Jeroen, 2312 RD Leiden (NL); Brok, Jacco, 7542 JR Enschede (NL)
(74) Representative: Sarup, David Alexander

(56) References cited:
- US-A1- 2003 110 397
- US-A1- 2003 154 381
- US-A1- 2004 123 153

## Description

### FIELD OF THE INVENTION

The present invention relates to the field of data networks and, more specifically, to methods of protecting network systems from viruses and other malicious applications by enforcing security policies.

### BACKGROUND OF THE INVENTION

Although the universal increase in the implementation of the Internet and local intranets has resulted in many desirable results, such as the speed and breadth with which information is disseminated, it has also enabled many undesirable results. One of the most notable undesirable results associated with the implementation of such networks is the ease of the transmission of computer viruses, worms and other malicious applications. More specifically, before the advent of the Internet and local intranets, users rarely read or copied data onto their computers from unknown external sources. However, users today routinely receive data from unknown computers via e-mail or via download from the world-wide-web using, for example, a web browser. As such, any company or service provider providing network access is concerned with security. In particular, viruses and other malicious applications are a threat that needs to be contained. Most malicious applications exploit known security flaws in popular operating systems, in particular ones that are in widespread use, such as all versions of Microsoft Windows®. They first infect a vulnerable station, and then use this host to initiate communication with the purpose of spreading the infection and/or overloading a network.

Most currently available virus protection software packages focus on identifying and removing viruses from a system. The virus protection programs protect the computer by scanning e-mail and other files for know sections of a virus or worm. Whenever a file is identified as containing a known virus or worm, the user is alerted and the file can be removed or the virus within the file may be removed. Whenever a new virus is identified, new code is written to search for the identifiable features of the new virus. However, these software programs are ineffective against new viruses that have been created after the virus software program was created since the virus protection software will not know what the identifiable features of the new virus are and will thus not find it when it scans the files.

US2003/0110397 A1 discloses improved approaches for communication changes to security policies in a distributed security system. Various changes are guaranteed to be delivered to the affected users without compromising the network efficiency.

US2003/0154381 A1 discloses a securing module that causes all files stored in a given place to have substantially similar security. A file to be secured can be dropped into a designated place and the securing module is configured to take actions to secure the file transparently in accordance with the security characteristics of the designated place.

US2004/0123153 A1 discloses security tools for enforcing different policies based on security features (e.g. operation of anti-virus software) in a client mobile computing device. The different security policies provide enforcement mechanisms that may be tailored based upon the detected location and/or active security features associated with the mobile device.

### SUMMARY OF THE INVENTION

The present invention addresses various deficiencies in the prior art by providing a method, apparatus and system for enforcing the security policies of a network.

In one embodiment of the present invention a method of enforcing the security policies of a network includes determining if a client requesting access to the network is in compliance with a current version of the security policies required to gain access to the network, and if the requesting client is not in compliance with a current version of the security policies required to gain access to the network, denying the client access to the network and making accessible to the client a current version of the security policies. Clients having a current version of the security policies are added to a compliant client list and are subsequently granted access to the network. Upon the update of the security policies, all of the listed clients are removed from the list of compliant clients and are required to download the current, updated version of the security policies before being granted access to the network.

In an alternate embodiment of the present invention, an access gateway for enforcing the security policies of a network on a client requesting access to the network includes a memory for storing information, such as a list of compliant clients, and program instructions and a processor for executing the instructions. The access gateway is adapted to perform the steps of a method of the present invention and, particularly in one embodiment, to perform the steps of determining if a client requesting access to the network is in compliance with a current version of the security policies of the network, and if the client is not in compliance with a current version of the security policies, denying the client access to the network and making accessible to the client a current version of the security policies.

In one embodiment of the present invention, the access gateway maintains a copy of the most current version of the security policies in its memory and makes the security policies available for download by a client having an outdated version of the security policies. In an alternate embodiment of the present invention, the access gateway directs the client to a remote server for downloading a most current version of the security policies of the network. Alternatively, the access gateway directs the client to a predetermined web-site for downloading a most current version of the security policies of the network.

### BRIEF DESCRIPTION OF THE DRAWINGS

The teachings of the present invention can be readily understood by considering the following detailed description in conjunction with the accompanying drawings, in which:
FIG. 1 depicts a high-level block diagram of a portion of an IP network where an embodiment of the present invention may be implemented; and
FIG. 2 depicts a high-level block diagram of an embodiment of an access gateway suitable for use in the IP network of FIG. 1; and
FIG. 3 depicts a method for enforcing security policies in accordance with one embodiment of the present invention.

To facilitate understanding, identical reference numerals have been used, where possible, to designate identical elements that are common to the figures.

### DETAILED DESCRIPTION OF THE INVENTION

Although various embodiments of the present invention are being depicted herein with respect to an IP network, the specific embodiments of the present invention should not be treated as limiting the scope of the invention. It will be appreciated by one skilled in the art and informed by the teachings of the present invention, that the concepts of the present invention may be applied in substantially any network for enforcing security policies.

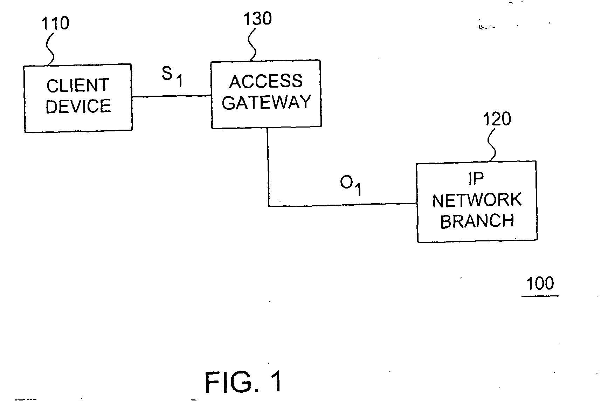

FIG. 1 depicts a high-level block diagram of a portion of an IP network where an embodiment of the present invention may be implemented. The IP network 100 of FIG. 1 illustratively comprises a client device 110 and an IP network branch 120. The IP network 100 further includes an access gateway 130 for providing communication between the client 110 and the IP network branch 120. The IP network branch 120 of the IP network 100 comprises conventional IP network components such as an IP address server, file servers, other clients and web servers (not shown). The gateway 130 of the IP network 100 of FIG. 1 maintains information regarding a latest version of client software and the latest security policies required for communication from the client to the IP network branch 120. The latest security policies information may comprise information regarding security measures required for communication with the modified IP network branch 120 such as a latest version of a virus protection software and other related known protection measures. The client software may comprise software needed by a client for downloading the security policies or for performing other security measures as indicated by the security policies.

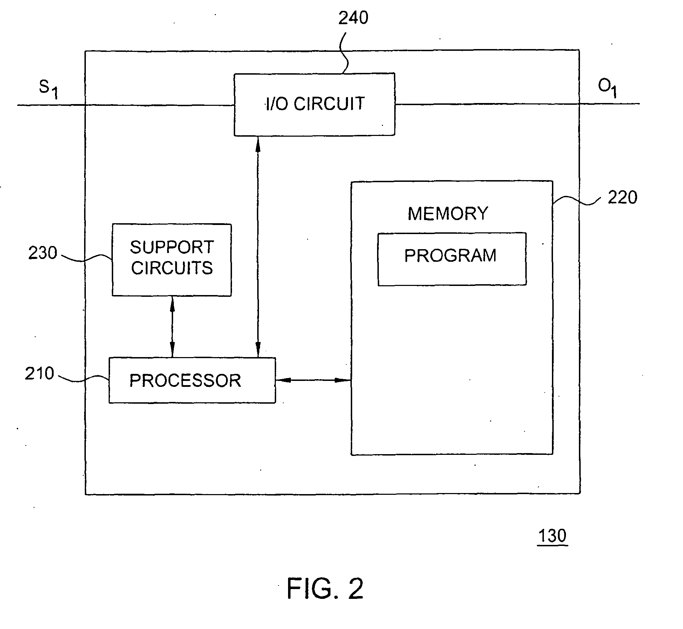

FIG. 2 depicts a high level block diagram of an access gateway suitable for use in the IP network 100 of FIG. 1. The access gateway 130 of FIG. 2 comprises a processor 210 as well as a memory 220 for storing information and control programs. The processor 210 cooperates with conventional support circuitry 230 such as power supplies, clock circuits, cache memory and the like as well as circuits that assist in executing the software routines stored in the memory 220. The access gateway 130 also contains input-output circuitry 240 that forms an interface between the various functional elements communicating with the access gateway 130. For example, in the embodiment of FIG. 1, the access gateway 130 communicates with the client 110 via a signal path S1 and to the IP network branch 120 via a signal path O1.

Although the access gateway 130 of FIG. 2 is depicted as a general purpose computer that is programmed to perform various control functions in accordance with the present invention, the invention can be implemented in hardware, for example, as an application specified integrated circuit (ASIC). As such, the process steps described herein are intended to be broadly interpreted as being equivalently performed by software, hardware, or a combination thereof.

In the IP network 100 of FIG. 1, when the client 110 wishes to establishes a connection with the IP branch 120 of the IP network 100, a connection request is communicated to the access gateway 130. If the access gateway 130 does not recognize the client 110 as a client that has already received an updated version of security policies from the gateway 130, the gateway 130 requires the client 110 to download a current version of a client software and, in particular, a current version of the security policies. More specifically, security policies may comprise a portion of a client software identifying patches and other applications, such as particular versions of virus scanners, that a service provider or company requires every client requesting access to the IP network branch 120 to possess before being granted access to the IP network branch 120.

The security policies of the present invention may be expressed in substantially any format and specifically in various known formats, such as passive formats (e.g., documents in a memory of a client) or active formats (e.g., script) such that they are capable of being examined by the access gateway 130. For example, in various embodiments of the present invention, security policies are expressed in a scripting language (e.g., JavaScript, VBScript, etc.) which is executed on the client 110. Using a scripting language, reference may be made to the state of the local machine, for example the Windows registry, a version of the operating system installed, installed patches and software, versions of applications installed, services running, network ports open for receiving packets, general configuration and settings, and users logged into the system, to determine if a client is in conformance with the latest security policies.

Referring back to FIG. 1, when the access gateway 130 receives a connection request from the client 110, the access gateway 130 determines if the client 110 has previously received an updated version of the client software by, for example, referring to a list maintained in the access gateway 130 of clients having received a latest version of the security policies (explained in greater detail below). If the client 110 does not contain the latest security policies, the access gateway 130 refuses the client 110 access to the IP network branch 120 and requires the client 110 to download a copy of the latest version of a client software containing a latest version of the security policies before allowing the client to communicate with the IP network branch 120. That is, if the client 110 does not contain the latest security policies, the client 110 is isolated from network resources of the IP network branch 120, such as file servers, other clients, web servers, etc.

In various embodiments of the present invention, the latest client software is maintained in a memory of the access gateway 130. As such, if the client 110 does not contain the latest security policies, the access gateway 130 makes available the latest client software and associated security policies to the client 110 for downloading. Once the client 110 has complied with the requirements and downloaded the latest version of the client software, which includes at minimum the latest security policies, the access gateway 130 examines the now compliant client 110 and adds the client 110 to a list of compliant clients maintained in, for example, a memory of the access gateway 130. In alternate embodiments of the present invention, instead of having to examine a client that has downloaded a latest version of client software and associated security policies to add the client to a compliant client list, the access gateway 130 may instead receive a message from, for example, the downloading client or from a source of the client software and associated security policies (i.e., in this embodiment a memory of the access gateway 130, in alternate embodiments described below a remote server or web-site) confirming that the client 110 has downloaded the latest version of the client software to trigger the access gateway 130 to add the client 110 to the list of compliant clients maintained in the access gateway 130. Having been added to the compliant client list, subsequent requests by the client 110 (or other compliant clients) for access to the IP network branch 120 will be granted by the access gateway 130. Although in the embodiment of the invention described above a client software and associated security policies were maintained in a memory of the access gateway 130, in alternate embodiments of the present invention required client software and associated security policies may be stored in a memory outside of the access gateway 130.

In various embodiments of the present invention, the latest version of a client software and associated security policies are loaded into the memory of the access gateway 130 by a user. In such embodiments, when a user inputs an updated client software and associated security policies, the access gateway 130 clears the list of compliant clients and requires each new client requesting access to the IP network branch 120 to download the new client software and security policies as previously described.

In alternate embodiments of the present invention, the access gateway 130 may instead access a remote location such as a remote server or an Internet site (not shown) for attaining a copy of a latest client software and security policies. More specifically, in such embodiments, a remote server or Internet site are adapted to maintain the latest version of a client software, which contains the latest version of security policies required to gain access to the IP network branch 120. In such embodiments, the access gateway 130 may obtain the latest version of the client software and security policies in the form of an ActiveX component, which communicates with the access gateway 130 using, for example, a proprietary channel.

In such embodiments of the present invention, if client software and associated security policies are updated on the remote server or on the Internet site, the access gateway 130 is informed of the update, by for example the remote server or the Internet site or by a user updating the client software and associated security policies, and the access gateway 130 downloads a copy of the latest client software and security policies to a memory of the access gateway 130. In response to the update, the access gateway 130 also clears the list of compliant clients and requires each new client requesting access to the IP network branch 120 to download the new client software and security policies. Alternatively, in such embodiments of the present invention, the access gateway 130 may periodically (i.e., according to a predetermined time interval) monitor the remote server or Internet site for updates to the client software and security policies to ensure that it maintains a copy of the latest version of the client software and security policies for downloading by a client requesting access to an IP network branch 120.

In alternate embodiments of the present invention and referring back to FIG. 1, if the access gateway 130 determines that the client 110 does not contain the latest version of a client software and security policies, the client 110 is redirected by the access gateway 130 to a remote location, such as a remote server or an internet site. The redirection of the client 110 to the remote server or Internet site is implemented using a restrictive connection such that the client 110 is isolated from network resources of the IP network branch 120, such as file servers, other clients, web servers, etc. Such restrictive connections may include assigning to the client 110 a predetermined IP address or Internet address allowing the client 110 access to only the remote server or a specific Internet site, respectively.

In such embodiments, downloadable versions of the latest version of the client software and security policies are made available to the client 110 via the remote server or the Internet site. Once the client 110 has complied with the requirements and downloaded the latest version of the client software, which includes at minimum the latest security policies, the access gateway 130 examines the now compliant client 110 and adds the client 110 to a list of compliant clients maintained, for example, in a memory of the access gateway 130: As such, subsequent requests by the client 110 (or other compliant clients) for access to the IP network branch 120 will be granted by the access gateway 130. However and as previously described, in alternate embodiments of the present invention, instead of having to examine a client that has downloaded a latest version of client software and associated security policies to add the client to a compliant client list, the access gateway 130 may instead receive a message confirming that the client 110 has downloaded the latest version of the client software to trigger the access gateway 130 to add the client 110 to the list of compliant clients maintained in the access gateway 130.

As in the previously described embodiments of the present invention, in embodiments of the present invention as described in the directly preceding example, the access gateway is informed of updates to the client software and the security policies via any of the methods described above (i.e., by periodically checking the remote server or the Internet site or by receiving an indication from the remote server or the Internet site). As such, if a client software and associated security policies are updated in the remote server or on the Internet site, the access gateway 130 clears the list of compliant clients and requires each new client requesting access to the IP network branch 120 to download the new client software and security policies.

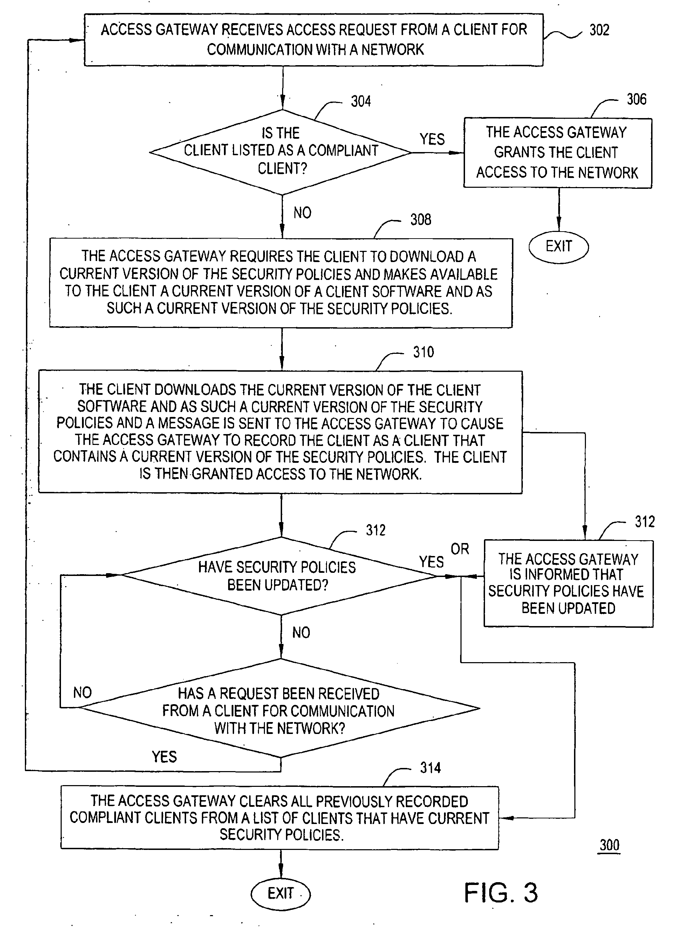

FIG. 3 depicts a method for enforcing security policies in accordance with one embodiment of the present invention. The method 300 is entered at step 302 where a request for access to the IP network branch from a client is received by an access gateway of the IP network. The method 300 then proceeds to step 304.

At step 304, the access gateway determines if the client is in compliance with the latest security policies by, for example, referring to a list of compliant clients. If the access gateway recognizes the requesting client as a client that has already received an updated version of the current security policies, then the method 300 proceeds to step 306. If the access gateway does not recognize the requesting client as a client that has already received an updated version of the current security policies, then the method 300 proceeds to step 308.

At step 306, the access gateway grants the client access to the IP network branch. The method 300 is then exited.

At step 308, the access gateway requires the client to download a current version of the security policies and makes available to the client a current version of a client software and associated security policies. The method 300 then proceeds to step 310.

At step 310, the client downloads the current version of the client software and as such a current version of the security policies and a message is sent to the access gateway to cause the access gateway to record the client as a client that contains a current version of the security policies. Upon downloading of the current version of the client software and as such a current version of the security policies, the client retransmits the previously transmitted request for access to the IP network branch and access to the IP network branch is granted by the access gateway. The method 300 then proceeds to step 312.

At step 312, the access gateway periodically checks a source of the client software and as such the security policies to determine if the current client software and associated security policies have been updated. If the security policies have been updated, the method 300 proceeds to step 314. If the security policies have not been updated, the access gateway continues to periodically check a source of the client software and associated security policies to determine if the current security policies have been updated until another request for access to the network from a client is received by the access gateway. The method 300 then returns to step 302.

In an alternate step 312, the access gateway is informed that the current security policies have been updated. The method 300 then proceeds to step 314.

At step 314, the access gateway clears all previously recorded compliant clients from a list of clients that have current security policies. The method 300 is then exited.

Although various embodiments of the present invention were described above with reference to FIG. 1 where a client was directed to a remote server or to a specific Internet site for downloading client software and security policies required to gain access to the IP network branch, the above embodiments are not the only conceivable implementations for providing the client software and security policies to a client. For example, in a network attempting to fulfill a dial-up connection, a client may be directed to a source containing ac current version of the required client software and security policies by calling a specific number which directs the client onto a predetermined dial-in server (e.g. 0800-QUARANTINE) adapted to make accessible to the client the required security policies.

While the forgoing is directed to various embodiments of the present invention, other and further embodiments of the invention may be devised without departing from the basic scope thereof. As such, the appropriate scope of the invention is to be determined according to the claims, which follow.

## Claims

1. A method of enforcing security policies, comprising:
determining if a client requesting access to the network is in compliance with a current version of said security policies, wherein compliance is determined by checking a listing of compliant clients; and
if a client is not in compliance with a current version of said security policies, denying said client access to said network and making accessible to said client a current version of said security policies;
wherein, upon receiving confirmation that a previously non-compliant client has downloaded said current version of security policies, the previously non-compliant client is added to said listing of compliant clients;
**characterised in that:**
wherein, when said security policies are updated, said listing of compliant clients is cleared.

2. The method of claim 1, wherein a non-compliant client is directed to a remote server for accessing a current version of said security policies.

3. The method of claim 1, wherein a non-compliant client is directed to a predetermined web-site for accessing a current version of said security policies.

4. A system for enforcing security policies of a network upon clients requesting access to said network, said system comprising:
at least one client;
an access gateway for controlling the access of said at least one client to said network; and
said network for providing network services to said at least one client when access to said network is granted to said at least one client by said access gateway;
wherein said access gateway comprises a memory for storing information and program instructions and a processor for executing said instructions and is adapted to perform the steps of:
determining if a client requesting access to said network is in compliance with a current version of said security policies, wherein compliance is determined by checking a listing of compliant clients; and
if a client is not in compliance with a current version of said security policies, denying said at least one client access to said network and making accessible to said client a current version of said security policies;
wherein, upon receiving confirmation that a previously non-compliant client has downloaded said current version of security policies, the previously non-compliant client is added to said listing of compliant clients;
**characterized in that**:
wherein, when said security policies are updated, said listing of compliant clients is cleared.

5. The system of claim 4, wherein said access gateway directs a non-compliant client to a remote server for accessing a current version of said security policies.

6. The system of claim 4, wherein said access gateway directs a non-compliant client to a predetermined web-site for accessing a current version of said security policies.

7. The system of claim 4, wherein said access gateway maintains said listing of compliant clients in said memory, wherein said listing of compliant clients includes clients having a current version of said security policies.

8. The system of claim 4, further comprising a remote server having a current version of said security policies and said access gateway directs a non-compliant client to said remote server for accessing a current version of said security policies.

9. The system of claim 4, further comprising a web server comprising a web-site having a current version of said security policies and said access gateway directs a non-compliant client to said web server which directs said non-compliant client to said web-site for accessing a current version of said security policies.

## Patentansprüche

1. Verfahren zur Durchsetzung von Sicherheitsrichtlinien, das Folgendes umfasst:
Bestimmen, ob ein Client, der Zugriff auf das Netzwerk anfordert, konform mit einer aktuellen Version der Sicherheitsrichtlinien ist, wobei die Konformität durch Prüfen einer Auflistung von konformen Clients bestimmt wird, und
wenn ein Client nicht konform mit einer aktuellen Version der Sicherheitsrichtlinien ist, Verweigern des Client-Zugriffs auf das Netzwerk und Schaffen der Möglichkeit des Zugriffs auf eine aktuelle Version der Sicherheitsrichtlinien für den Client,
wobei nach dem Empfangen der Bestätigung, dass ein bisher nicht konformer Client die aktuelle Version der Sicherheitsrichtlinien heruntergeladen hat, der bisher nicht konforme Client der Auflistung konformer Clients hinzugefügt wird, **dadurch gekennzeichnet, dass**
wenn die Sicherheitsrichtlinien aktualisiert werden, die Auflistung der konformen Clients gelöscht wird.

2. Verfahren nach Anspruch 1, wobei ein nicht konformer Client zwecks Zugriffs auf eine aktuelle Version der Sicherheitsrichtlinien zu einem Fernserver geleitet wird.

3. Verfahren nach Anspruch 1, wobei ein nicht konformer Client zwecks Zugriffs auf eine aktuelle Version der Sicherheitsrichtlinien zu einer festgelegten Webseite geleitet wird.

4. System zur Durchsetzung von Sicherheitsrichtlinien eines Netzwerkes, wenn Clients Zugriff auf dieses Netzwerk anfordern, wobei das System Folgendes umfasst:
mindestens einen Client,
ein Zugriffsgateway zum Steuern des Zugriffs des mindestens einen Client zum Netzwerk und
das Netzwerk zum Bereitstellen von Netzwerkdiensten für den mindestens einen Client, wenn dem mindestens einen Client vom Zugriffsgateway der Zugriff auf das Netzwerk gewährt wurde,
wobei das Zugriffsgateway einen Speicher zum Speichern von Informationen und Programmbefehlen und einen Prozessor zum Ausführen der Befehle aufweist und dafür angepasst ist, folgende Schritte auszuführen:
Bestimmen, ob ein Client, der Zugriff auf das Netzwerk anfordert, konform mit einer aktuellen Version der Sicherheitsrichtlinien ist, wobei die Konformität durch Prüfen einer Auflistung von konformen Clients bestimmt wird, und
wenn ein Client nicht konform mit einer aktuellen Version der Sicherheitsrichtlinien ist, Verweigern des mindestens einen Client-Zugriffs auf das Netzwerk und Schaffen der Möglichkeit des Zugriffs auf eine aktuelle Version der Sicherheitsrichtlinien für den Client,
wobei nach dem Empfangen der Bestätigung, dass ein bisher nicht konformer Client die aktuelle Version der Sicherheitsrichtlinien heruntergeladen hat, der bisher nicht konforme Client der Auflistung konformer Clients hinzugefügt wird, **dadurch gekennzeichnet, dass**
wenn die Sicherheitsrichtlinien aktualisiert werden, die Auflistung der konformen Clients gelöscht wird.

5. System nach Anspruch 4, wobei das Zugriffsgateway einen nicht konformen Client zwecks Zugriffs auf eine aktuelle Version der Sicherheitsrichtlinien zu einem Fernserver leitet.

6. System nach Anspruch 4, wobei das Zugriffsgateway einen nicht konformen Client zwecks Zugriffs auf eine aktuelle Version der Sicherheitsrichtlinien zu einer festgelegten Webseite leitet.

7. System nach Anspruch 4, wobei das Zugriffsgateway die Auflistung von konformen Clients im Speicher führt, wobei die Auflistung von konformen Clients Clients mit einer aktuellen Version der Sicherheitsrichtlinien aufweist.

8. System nach Anspruch 4, ferner einen Fernserver mit einer aktuellen Version der Sicherheitsrichtlinien umfassend, wobei das Zugriffsgateway einen nicht konformen Client zwecks Zugriffs auf eine aktuelle Version der Sicherheitsrichtlinien zu dem Fernserver leitet.

9. System nach Anspruch 4, ferner einen Webserver umfassend, der eine Webseite mit einer aktuellen Version der Sicherheitsrichtlinien aufweist, wobei das Zugriffsgateway einen nicht konformen Client zwecks Zugriffs auf eine aktuelle Version der Sicherheitsrichtlinien zu dem Webserver leitet, der den nicht konformen Client zu der Webseite leitet.

## Revendications

1. Procédé d'application de politiques de sécurité, comprenant les étapes suivantes :
déterminer si un client demandant l'accès au réseau est en conformité avec une version actuelle desdites politiques de sécurité, la conformité étant déterminée en vérifiant une liste de clients conformes ; et
si un client n'est pas en conformité avec une version actuelle desdites politiques de sécurité, refuser audit client l'accès audit réseau et
donner audit client l'accès à une version actuelle desdites politiques de sécurité ;
dans lequel, lors de la réception d'une confirmation qu'un client précédemment non conforme a téléchargé ladite version actuelle des politiques de sécurité, le client précédemment non conforme est ajouté à ladite liste de clients conformes ;
**caractérisé en ce que**
lorsque lesdites politiques de sécurité sont mises à jour, ladite liste de clients conformes est effacée.

2. Procédé selon la revendication 1, dans lequel un client non conforme est dirigé vers un serveur distant pour accéder à une version actuelle desdites politiques de sécurité.

3. Procédé selon la revendication 1, dans lequel un client non conforme est dirigé vers un site Web prédéterminé pour accéder à une version actuelle desdites politiques de sécurité.

4. Système pour appliquer des politiques de sécurité d'un réseau à des clients demandant l'accès audit réseau, ledit système comprenant :
au moins un client ;
une passerelle d'accès pour commander l'accès dudit au moins un client audit réseau ; et
ledit réseau pour fournir des services de réseau audit au moins un client lorsque l'accès audit réseau est accordé audit au moins un client par ladite passerelle d'accès ;
dans lequel ladite passerelle d'accès comprend une mémoire pour stocker des informations et des instructions de programme et un processeur pour exécuter lesdites instructions et est apte à réaliser les étapes suivantes :
déterminer si un client demandant l'accès audit réseau est en conformité avec une version actuelle desdites politiques de sécurité, la conformité étant déterminée en vérifiant une liste de clients conformes ; et
si un client n'est pas en conformité avec une version actuelle desdites politiques de sécurité, refuser audit au moins un client l'accès audit réseau et donner audit client l'accès à une version actuelle desdites politiques de sécurité ;
dans lequel, lors de la réception d'une confirmation qu'un client précédemment non conforme a téléchargé ladite version actuelle des politiques de sécurité, le client précédemment non conforme est ajouté à ladite liste de clients conformes ;
**caractérisé en ce que :**
lorsque lesdites politiques de sécurité sont mises à jour, ladite liste de clients conformes est effacée.

5. Système selon la revendication 4, dans lequel ladite passerelle d'accès dirige un client non conforme vers un serveur distant pour accéder à une version actuelle desdites politiques de sécurité.

6. Système selon la revendication 4, dans lequel ladite passerelle d'accès dirige un client non conforme vers un site Web prédéterminé pour accéder à une version actuelle desdites politiques de sécurité.

7. Système selon la revendication 4, dans lequel ladite passerelle d'accès maintient ladite liste de clients conformes dans ladite mémoire, dans lequel ladite liste de clients conformes comprend des clients ayant une version actuelle desdites politiques de sécurité.

8. Système selon la revendication 4, comprenant en outre un serveur distant ayant une version actuelle desdites politiques de sécurité et ladite passerelle d'accès dirige un client non conforme vers ledit serveur distant pour accéder à une version actuelle desdites politiques de sécurité.

9. Système selon la revendication 4, comprenant en outre un serveur Web comprenant un site Web ayant une version actuelle desdites politiques de sécurité et ladite passerelle d'accès dirige un client non conforme vers ledit serveur Web qui dirige ledit client non conforme vers ledit site Web pour accéder à une version actuelle desdites politiques de sécurité.
